# EUROPÄISCHE PATENTANMELDUNG

(11) **EP 3 454 094 A1**
(43) Veröffentlichungstag der Anmeldung: **13.03.2019**
(21) Anmeldenummer: 18193406.8
(22) Anmeldetag: 10.09.2018
(51) Int. Cl.: G01V 8/12

(54) **OPTOELEKTRONISCHES SENSORSYSTEM**

(30) Priorität: 11.09.2017 DE 102017120877
(71) Anmelder: SICK AG, 79183 Waldkirch/Breisgau (DE)
(72) Erfinder: Albrecht, Roland, 79211 Denzlingen (DE); Eble, Johannes, 79183 Waldkirch (DE); Kriener, Eva-Maria, 79117 Freiburg (DE)
(74) Vertreter: Manitz Finsterwald Patentanwälte PartmbB

(57) **Zusammenfassung**

Die vorliegende Erfindung betrifft ein optoelektronisches Sensorsystem zum Detektieren von Objekten in einem Überwachungsbereich, mit einem Lichtsender zum Aussenden von Sendelicht entlang eines Sendelichtpfads in den Überwachungsbereich, einem Lichtempfänger zum Empfangen von Empfangslicht aus dem Überwachungsbereich, das von einem zu detektierenden Objekt in dem Überwachungsbereich oder einen den Überwachungsbereich begrenzenden Reflektor entlang eines Empfangslichtpfads in Richtung des Lichtempfängers remittiert wird, und einer dem Lichtsender und dem Lichtempfänger vorgeordneten Objektivanordnung. Der Sendelichtpfad und Empfangslichtpfad verlaufen zumindest in jeweiligen dem Lichtsender bzw. dem Lichtempfänger zugewandten Teilabschnitten voneinander beabstandet. Das Sensorsystem weist zwischen der Objektivanordnung einerseits und dem Lichtsender und dem Lichtempfänger andererseits zumindest ein Umlenkelement auf. Das Sensorsystem ist dazu ausgelegt, einen linienförmigen Abtastfleck im Überwachsungsbereich zu erzeugen, und der Lichtempfänger ist dazu ausgelegt, eine Abbildung des von einem Objekt remittierten Abtastflecks zu erfassen. Der linienförmige Abtastfleck erstreckt sich senkrecht zu einer Ebene, welche durch die Teilabschnitte des Sendelichtpfades und des Empfangslichtpfades definiert ist, welche dem Lichtsender bzw. dem Lichtempfänger zugewandt sind.

## Beschreibung

Die vorliegende Erfindung betrifft ein optoelektronisches Sensorsystem zum Detektieren von Objekten in einem Überwachungsbereich, mit einem Lichtsender zum Aussenden von Sendelicht entlang eines Sendelichtpfads in den Überwachungsbereich, einem Lichtempfänger zum Empfangen von Empfangslicht aus dem Überwachungsbereich, das von einem zu detektierenden Objekt in dem Überwachungsbereich oder einen den Überwachungsbereich begrenzenden Reflektor entlang eines Empfangslichtpfads in Richtung des Lichtempfängers remittiert wird, und einer dem Lichtsender und dem Lichtempfänger vorgeordneten Objektivanordnung. Der Sendelichtpfad und der Empfangslichtpfad verlaufen zumindest in jeweiligen dem Lichtsender bzw. dem Lichtempfänger zugewandten Teilabschnitten voneinander beabstandet.

Derartige Sensorsysteme sind z. B. als Reflexionslichtschranken oder Lichttaster ausgestaltet. Das verwendete Licht kann dabei jede Art von Licht sein, also Licht im sichtbaren Bereich, aber auch Licht im Infrarotbereich oder im ultravioletten Bereich.

Das Grundprinzip bei Lichtschranken und Lichttastern besteht darin, dass ein Lichtsender Licht, insbesondere Impulslicht, aussendet, welches über eine Kollimatoranordnung auf das zu detektierende Objekt fokussiert wird. Bei einem Lichttaster wird das Licht von einem erfassten Objekt remittiert. Ein Teil des Lichts trifft über eine Empfangsoptik auf den Lichtempfänger, welcher ein oder mehrere lichtempfindliche Elemente, beispielsweise Fotodioden, in einer Reihenanordnung umfassen kann.

Bei einer Reflexionslichtschranke wird das ausgesendete Licht von einem Reflektor zurück in Richtung des Sensorsystems remittiert bzw. reflektiert und in entsprechender Weise von dem Lichtempfänger erfasst. Im Unterschied zu einem Lichttaster wird bei einer Reflexionslichtschranke eine Unterbrechung des Sende- und/oder Empfangslichtpfades registriert.

Derartige optoelektronische Sensorsysteme können in verschiedenen Bauarten ausgeführt werden.

Bei einer meist als Autokollimationsanordnung bezeichneten Bauart sind der Sendelichtpfad und der Empfangslichtpfad zumindest im Überwachungsbereich überlagert und werden im Inneren des Sensorsystems mit Hilfe eines Teilerspiegels voneinander getrennt, d.h. der Empfangslichtpfad wird aus dem gemeinsamen Lichtpfad ausgekoppelt und in Richtung des Lichtempfängers gelenkt.

Bei einer Bauart in Biaxialanordnung verlaufen der Sendelichtpfad und der Empfangslichtpfad im Inneren des Sensorsystems und auch im Überwachungsbereich getrennt voneinander, d.h. der Austritt des Sendelichtpfads aus dem Sensorsystem und der Eintritt des Empfangslichtpfads in das Sensorsystem sind räumlich voneinander beabstandet. Die Biaxialanordnung ist auch unter dem Begriff "Pupillenteilungssystem" bekannt. Im vorliegenden Text werden diese Begriffe synonym verwendet.

Je nach Anwendungszweck weisen die beiden Bauarten verschiedene Vor- und Nachteile auf. Für den Einsatz des Sensorsystems als Reflexionslichtschranke ist in der Regel eine Autokollimationsanordnung von Vorteil, während für eine Ausgestaltung als Lichttaster eine Biaxialanordnung vorteilhaft ist, da diese im Vergleich zu einer Autokollimationsanordnung eine deutlich höhere Empfindlichkeit aufweist. Aus DE 1 297 006 B ist eine Reflexionslichtschranke mit geometrischer Strahlenteilung bekannt, wobei der Lichtsender und der Lichtempfänger in der Nähe je eines Brennpunkts der Abbildungsoptik angeordnet sind. Eine Trennung von Sende- und Empfangslichtstrom wird durch vor oder hinter der Abbildungsoptik angeordnete keilförmige optische Elemente verursacht. In EP 0 083 431 B1 wird eine Reflexionslichtschranke mit einer Lichtquellenanordnung und optischen Elementen zur Erzeugung zweier entlang getrennter optischer Achsen gerichteter Strahlenbündel sowie mit einem Fotodetektor zum Empfang von zurückgeworfenem Licht beschrieben. Die Achse des einen Strahlenbündels verläuft im Wesentlichen parallel zur Empfangsrichtung des Fotodetektors. Die optischen Elemente sind so ausgebildet und angeordnet, dass die Achse des anderen Strahlenbündels mit der des einen Strahlenbündels einen spitzen Winkel einschließt.

EP 0 170 008 A2 betrifft einen Lichttaster oder eine Lichtschranke mit einem Lichtsender und einem Lichtempfänger im gleichen Gehäuse, einer Plankonvexlinse zur Bündelung des Sendelichts sowie zur Fokussierung des zurückgeworfenen Lichts und Mitteln zur Lenkung des zurückgeworfenen Lichts. Die Planfläche der Plankonvexlinse ist mit einer Neigung zu einer zur Achse des Lichtbündels senkrechten Ebene angeordnet, um zu verhindern, dass an der Plankonvexlinse zurückgeworfenes Sendelicht auf den Lichtempfänger trifft.

Es ist die Aufgabe der vorliegenden Erfindung, ein optoelektronisches Sensorsystem zu schaffen, das vielseitig einsetzbar ist und einfach zu fertigen ist.

Die Lösung erfolgt durch ein optoelektronisches Sensorsystem mit den Merkmalen des Anspruchs 1.

Das erfindungsgemäße Sensorsystem weist zwischen der Objektivanordnung einerseits und dem Lichtsender und dem Lichtempfänger andererseits zumindest ein Umlenkelement auf. Das Sensorsystem ist bevorzugt dazu ausgelegt, einen linienförmigen Abtastfleck im Überwachsungsbereich zu erzeugen, und der Lichtempfänger ist dazu ausgelegt, eine Abbildung des von einem Objekt remittierten Abtastflecks zu erfassen. Der linienförmige Abtastfleck erstreckt sich bevorzugt senkrecht zu einer Ebene, welche durch die Teilabschnitte des Sendelichtpfades und des Empfangslichtpfades definiert ist, welche dem Lichtsender bzw. dem Lichtempfänger zugewandt sind.

Bei einer Ausgestaltung, die nicht Gegenstand des Anspruchs 1 ist, jedoch dem besseren Verständnis dient, wird vorgeschlagen, dass die Objektivanordnung einen ersten Objektivbereich und einen lateral zum ersten Objektivbereich beabstandeten zweiten Objektivbereich aufweist, wobei der Sendelichtpfad durch den ersten Objektivbereich verläuft, und dass das Sensorsystem einen zwischen der Objektivanordnung einerseits und dem Lichtsender und dem Lichtempfänger andererseits vorgesehenen Aufnahmeraum aufweist, in welchem wahlweise zumindest ein Umlenkelement einbringbar ist, welches dazu ausgelegt ist, den Empfangslichtpfad derart umzulenken bzw. zu definieren, so dass dieser bei eingebrachtem Umlenkelement durch den ersten Objektivbereich und bei nicht eingebrachtem Umlenkelement durch den zweiten Objektivbereich verläuft.

Bei einem eingebrachten Umlenkelement verlaufen demnach der Sendelichtpfad und der Empfangslichtpfad beide durch den ersten Objektivbereich. In dieser Konfiguration entspricht der Strahlengang des Sensorsystems einer Autokollimationsanordnung. Wenn das Umlenkelement nicht eingebracht ist, verlaufen der Sendelichtpfad und der Empfangslichtpfad beabstandet voneinander durch die beiden verschiedenen Objektivbereiche der Objektivanordnung und auch durch den Überwachungsbereich. Diese Konfiguration entspricht einer Biaxial- oder Pupillenteilungsanordnung. Das Sensorsystem lässt sich somit auf einfache Weise lediglich durch Einbringen oder Entfernen von einem oder mehreren Umlenkelementen von einer Autokollimationsanordnung in eine Biaxialanordnung und umgekehrt umwandeln.

Gemäß vorteilhafter Ausführungsformen verlaufen zumindest diejenigen Teilabschnitte des Sendelichtpfads und des Empfangslichtpfads, welche dem Lichtsender bzw. dem Lichtempfänger zugewandt sind, voneinander beabstandet, insbesondere parallel, oder in einem Winkel, insbesondere in einem rechten Winkel, zueinander. Dadurch wird gewährleistet, dass die Teilabschnitte räumlich getrennt voneinander verlaufen und Störlicht durch geeignete Maßnahmen, beispielsweise Trennwände zwischen den genannten Teilabschnitten, optisch voneinander getrennt sind, um eine Beeinträchtigung des Sensorbetriebs durch Störlicht oder dergleichen zu verhindern. Bei einer Konfiguration mit parallel verlaufenden Teilabschnitten sind in der Regel zwei Umlenkelemente erforderlich, wobei jedoch eine kompaktere Bauform erreicht werden kann. Bei einer Konfiguration, bei der die Teilabschnitte in einem insbesondere rechten Winkel zueinander verlaufen, ist in der Regel nur ein Umlenkelement erforderlich, wobei jedoch ein etwas vergrößerter Bauraum in Kauf genommen werden muss.

Bei einer beispielhaften Konfiguration, bei der diejenigen Teilabschnitte des Sendelichtpfads und des Empfangslichtpfads, welche dem Lichtsender bzw. dem Lichtempfänger zugewandt sind, parallel verlaufen, sind in der Regel zwei Umlenkelemente erforderlich, wobei das eine Umlenkelement als ein im kombinierten Sende-/Empfangslichtpfad angeordneter Teilerspiegel und das andere Umlenkelement als ein Umlenkspiegel ausgebildet sein kann, der in dem durch den Teilerspiegel umgelenkten Abschnitt des Empfangslichtpfades angeordnet ist. Die Funktionen von Teilerspiegel und Umlenkspiegel können auch in einem kombinierten Umlenkelement zusammengefasst sein.

Bei einer anderen beispielhaften Konfiguration, bei der die genannten Teilabschnitte in einem rechten Winkel zueinander verlaufen, ist in der Regel nur ein Umlenkelement erforderlich. So kann beispielsweise bei einer Konfiguration, bei der der Sendelichtpfad nicht umgelenkt wird und der dem Lichtempfänger zugewandte Teilabschnitt des Empfangslichtpfades senkrecht zum Sendelichtpfad verläuft, ein einziges, als Teilerspiegel ausgestaltetes Umlenkelement vorgesehen sein, das für eine Autokollimationsanordnung in den Aufnahmeraum, d. h. in diesem Fall in den kombinierten, durch den ersten Objektivbereich verlaufenden Sende-/Empfangslichtpfad eingebracht wird. Für eine Biaxialanordnung wird der Teilerspiegel aus dem Aufnahmeraum entfernt, wobei in dem Fall der durch den zweiten Objektivbereich verlaufende Empfangslichtpfad um 90° in Richtung Lichtempfänger umgelenkt werden muss. Hierfür kann sowohl der aus dem Aufnahmeraum entfernte Teilerspiegel als auch ein für diesen Zweck vorgesehener Umlenkspiegel verwendet werden.

Das Sensorsystem kann weitere strahlformende, strahlbegrenzende und/oder strahlumlenkende Elemente (z.B. Linsen, Blenden, Spiegel, Prismen) aufweisen, die insbesondere zwischen dem Aufnahmeraum einerseits und dem Lichtsender und/oder dem Lichtempfänger andererseits sowie auch zwischen dem Aufnahmeraum und dem Überwachungsbereich angeordnet sein können. Diese weiteren Elemente können insbesondere für beide Konfigurationen, d.h. Autokollimationskonfiguration und Biaxialkonfiguration, hinsichtlich ihrer Art und/oder ihrer Position identisch sein. Mit anderen Worten müssen für die Umwandlung zwischen den beiden Konfigurationen ausschließlich das oder die Umlenkelemente umpositioniert werden, wobei aber ein Austausch, Entfernen, Hinzufügen und/oder Umpositionieren einzelner weiterer Elemente, insbesondere auch weiterer Umlenkelemente, nicht prinzipiell ausgeschlossen sein muss.

Vorteilhafterweise fallen der Sendelichtpfad und der Empfangslichtpfad im Bereich der Objektivanordnung und dem Überwachungsbereich zusammen, wenn das zumindest eine Umlenkelement in den Aufnahmeraum eingebracht ist. Hierdurch wird gewährleistet, dass der Sende- und Empfangslichtpfad nicht nur gemeinsam durch den ersten Objektivbereich der Objektivanordnung hindurchtreten, sondern tatsächlich parallaxenfrei verlaufen, wie es bei einer idealen Autokollimationsanordnung gewünscht ist.

Gemäß einer ersten Ausführungsform umfasst das Sensorsystem zumindest ein Umlenkelement, welches wahlweise in den Aufnahmeraum einsetzbar ist. Bei dieser Ausgestaltung wird demnach für einen Wechsel zwischen den beiden Konfigurationen das Umlenkelement in den Aufnahmeraum eingesetzt oder aus diesem entnommen. Für einen Umbau ist hier in der Regel ein Öffnen des Gehäuses notwendig.

Gemäß einer alternativen Ausführungsform ist vorgesehen, dass das Sensorsystem zumindest ein zwischen einer Umlenkposition und einer Freigabeposition versetzbares, insbesondere schwenkbares oder verschiebbares, Umlenkelement umfasst, welches in der Umlenkposition in den Aufnahmeraum eingebracht ist, und in der Freigabeposition den Aufnahmeraum frei gibt. Das Versetzen des Umlenkelements kann nach einem Öffnen des Gehäuses erfolgen oder auch mit Hilfe von geeigneten Betätigungselementen, die durch das geschlossene Gehäuse hindurch nach außen geführt sind und ein Öffnen des Sensorsystems nicht erfordern. Grundsätzlich können auch motorische Antriebe zum Versetzen des oder der Umlenkelemente vorgesehen sein, so dass beispielsweise mit Hilfe einer geeigneten Steuerung eine Änderung der Konfiguration auf elektronischem Wege möglich ist. Die Ausgestaltung mit einem versetzbaren Umlenkelement hat den Vorteil, dass eine Änderung der Konfiguration jederzeit möglich ist, und dass auch bei einer Konfiguration des Sensorsystems als Biaxialanordnung das Umlenkelement nicht verlorengehen oder beschädigt werden kann, da es sich stets innerhalb des Sensorsystems befindet.

Es können grundsätzlich auch ein oder mehrere weitere Umlenkelemente vorgesehen sein, welche ebenfalls wahlweise einsetzbar oder versetzbar sind. Des Weiteren können ferner auch fest verbaute, d.h. nicht entnehmbare oder versetzbare Umlenkelemente vorgesehen sein, sofern sie den Wechsel zwischen den beiden Konfigurationen nicht behindern.

Das Umlenkelement kann als Teilerspiegel ausgebildet sein, welcher dazu ausgelegt ist, das Sendelicht im Wesentlichen unbeeinflusst durchzulassen und das Empfangslicht um einen Winkel, insbesondere einen rechten Winkel, umzulenken. Mit einem derartigen Teilerspiegel kann auf kostengünstige Weise eine Trennung von Sende- und Empfangslichtpfad im Sensorsystem erreicht werden.

Vorteilhafterweise kann zusätzlich zu einem Teilerspiegel ausgebildeten Umlenkelement ein weiteres, als Umlenkspiegel ausgebildetes Umlenkelement vorgesehen sein. Der Teilerspiegel ist vorteilhafterweise im Bereich des Sendelichtpfades vorgesehen, während der Umlenkspiegel im Bereich desjenigen Empfangslichtpfades angeordnet ist, der in einer Biaxialkonfiguration vorgesehen ist.

Gemäß einer weiteren vorteilhaften Ausgestaltung sind der Teilerspiegel und der Umlenkspiegel in einem integralen Umlenkelement unter Ausnutzung von Reflexionen an einer außen aufgebrachten Beschichtung oder von Totalreflexion an einer inneren Grenzfläche kombiniert.

Vorteilhafterweise weist die Objektivanordnung im ersten Objektivbereich ein erstes fokussierendes Linsenelement und im zweiten Objektivbereich ein zweites fokussierendes Linsenelement auf, wobei die Linsenelemente voneinander beabstandete optische Achsen aufweisen. Die Linsenelemente können beispielsweise als konkav-konvexe, plan-konvexe oder bikonvexe Linsen ausgebildet sein. Es hat sich als vorteilhaft erwiesen, wenn die konvexe Seite dem Lichtsender bzw. dem Lichtempfänger zugewandt ist. Hierdurch kann der Einfall von Störlicht reduziert werden.

Gemäß einer vorteilhaften Weiterbildung verlaufen der Sendelichtpfad und der Empfangslichtpfad entlang jeweiliger optischer Achsen, wobei die Linsenelemente derart zueinander angeordnet sind, dass der Abstand der optischen Achsen der Linsenelemente kleiner ist als der Abstand der optischen Achsen des Sendelichtpfads und des Empfangslichtpfads im Bereich Objektivanordnung. Bei einem derartigen Versatz zwischen den optischen Achsen der Linsenelemente und der Lichtpfade fallen in der Regel die Scheitelpunkte eines oder beider Linsenelemente nicht mit der optischen Achse des jeweiligen durch das Linsenelement verlaufenden Sende- bzw. Empfangslichtpfad zusammen. Dadurch wird bewirkt, dass der Sendelichtpfad und/oder der Empfangslichtpfad im Vergleich zu einer Anordnung der Linsenelemente, bei der die optischen Achsen der Linsenelemente mit der jeweiligen optischen Achse von Sende- bzw. Empfangslichtpfad zusammenfallen, geringfügig geneigt verlaufen. Dies hat zur Folge, dass sich der Sendelichtpfad und der Empfangslichtpfad innerhalb des Überwachungsbereichs schneiden. Hierdurch werden insbesondere Parallaxenfehler vermieden und dadurch die Empfindlichkeit des Sensorsystems gesteigert.

Gemäß einer weiteren vorteilhaften Ausgestaltung umfasst die Objektivanordnung zumindest ein dem ersten Objektivbereich oder dem zweiten Objektivbereich zugeordnetes optisches Keilelement, welches dazu ausgelegt ist, den Sendelichtpfad oder den Empfangslichtpfad derart umzulenken, dass sich der Sendelichtpfad und der Empfangslichtpfad innerhalb des Überwachungsbereichs schneiden. Es befindet sich also ein Keilelement vor dem ersten oder vor dem zweiten Objektivbereich bzw. Linsenelement, wobei sich das Keilelement auch über beide Objektivbereiche erstrecken kann, wobei dann ein Teilabschnitt des Keilelements vor einem Objektivbereich keilförmig und vor dem anderen Objektivbereich planparallel ausgestaltet sein kann. Alternativ ist es aber auch möglich, ein Keilelement vor dem ersten Objektivbereich und ein weiteres Keilelement mit entgegengesetzter Neigung vor dem zweiten Objektivbereich anzuordnen, wobei die beiden Keilelemente selbstverständlich auch einem einzigen Bauteil integriert sein können. Das oder die Keilelemente bewirken ebenso wie der vorstehend erläuterte Versatz zwischen den optischen Achsen der Linsenelemente und der Lichtpfade eine Neigung des Verlaufs von Sende- bzw. Empfangslichtpfad.

Grundsätzlich können beide Maßnahmen, d.h. der Versatz der optischen Achsen sowie das Vorsehen eines oder mehrerer Keilelemente, miteinander kombiniert werden. Die Keilelemente und/oder der Achsenversatz verbessern die Leistung des Sensorsystems in der Biaxialkonfiguration, sind jedoch für den Betrieb des Sensorsystems in der Autokollimationskonfiguration nicht zwingend erforderlich. Allerdings wird der Betrieb in der Autokollimationskonfiguration dadurch auch nicht beeinträchtigt. Eine Entfernung des oder der Keilelemente bzw. ein laterales Versetzen der Linsenelemente zur Aufhebung der Neigungsänderung von Sende- bzw. Empfangslichtpfad wäre zwar grundsätzlich möglich, ist jedoch nicht erforderlich. Vielmehr wird durch eine Aufrechterhaltung der Neigungsänderung der Lichtpfade gewährleistet, dass auch bei einer Änderung der Konfiguration das Sensorsystem nicht neu justiert werden muss.

Die Objektivanordnung kann sowohl aus Einzelelementen, d.h. einzelnen Linsenelementen und/oder Keilelementen zusammengefügt sein oder alternativ auch als integrales Element gefertigt sein. Die vorstehend genannten Linsenelemente können als Einzellinse oder auch als Linsengruppe, bestehend aus mehreren Einzellinsen, ausgestaltet sein.

Gemäß einer bevorzugten Ausführungsform ist das Sensorsystem dazu ausgelegt, einen linienförmigen Abtastfleck im Überwachungsbereich zu erzeugen, und der Lichtempfänger ist dazu ausgelegt, eine Abbildung des von einem Objekt remittierten Abtastflecks ortsaufgelöst zu erfassen. Ein derart ausgestaltetes Sensorsystem kann insbesondere zur Kantendetektion eingesetzt werden, beispielsweise bei der Überwachung von Bahnkanten bei der Verarbeitung von Bahnmaterial oder bei der Überwachung von Rollenmaterial auf Erreichen eines Grenzdurchmessers der Rolle.

Vorteilhafterweise erstreckt sich der linienförmige Abtastfleck senkrecht zu einer Ebene, welche durch diejenigen Teilabschnitte des Sendelichtpfads und des Empfangslichtpfads definiert ist, welche dem Lichtsender bzw. dem Lichtempfänger zugewandt sind. Der Abtastfleck verläuft hierbei parallel zu der Neigungsachse des oder der Umlenkelemente, d.h. parallel zu der Achse, um welche das oder die Umlenkelemente in Bezug auf den jeweiligen Lichtpfad verkippt sind. Bei dieser Ausrichtung muss die größte Ausdehnung des Umlenkelements, d.h. des Teilerspiegels und/oder des Umlenkspiegels, nur so groß sein wie die Erstreckung der Abtastfleckabbildung beim Auftreffen auf das Umlenkelement. Andernfalls müsste z.B. bei senkrechtem Verlauf des Abtastflecks zur Neigungsachse des oder der Umlenkelemente und bei einer beispielsweise angenommenen 45°-Kippung des Teiler- bzw. Umlenkspiegels in Bezug auf die optischen Achsen der Lichtpfade die größte Dimension des Umlenkelements 1,41-fach größer sein als die Erstreckung des Abtastflecks. Somit können bei der genannten vorteilhaften Ausgestaltung relativ kleine Umlenkelemente eingesetzt werden, was sowohl in Bezug auf störende Eigenschwingungen der Umlenkelemente als auch auf eine kompakte Bauform des Sensorsystems von Vorteil ist. Vorteilhafterweise erstreckt sich dann ein zeilenförmiges Empfangselement in derselben Richtung wie der Abtastfleck.

Diese besondere Ausgestaltung eines Sensorsystems mit einem linienförmigen Abtastfleck zur ortsaufgelösten Erfassung des remittierten Abtastfleckes, bei der sich der linienförmige Abtastfleck senkrecht zu einer Ebene erstreckt, welche durch die Teilabschnitte des Sendelichtpfades und des Empfangslichtpfades definiert ist, welche dem Lichtsender bzw. dem Lichtempfänger zugewandt sind lässt sich erfindungsgemäß auch in einem optoelektronischen Sensorsystem mit den Merkmalen des Oberbegriffes des Anspruches 1 kombinieren, ohne dass es möglich ist, das zumindest eine Umlenkelement aus dem Empfangslichtpfad herauszunehmen. Insofern lässt sich die vorteilhafte Ausrichtung des Linienlichtfleckes in Bezug auf die Neigung des zumindest einen Umlenkelementes auch bei einem Autokollimationssystem vorteilhaft verwenden, das nicht durch das Herausnehmen von Umlenkelementen aus dem Empfangslichtpfad in ein Pupillenteilungssystem umgestaltet werden kann. Insofern wird insbesondere für so ein Autokollimationssystem unabhängiger Schutz beansprucht (Anspruch 1).

Weitere vorteilhafte Ausgestaltungen der Erfindung ergeben sich aus den Unteransprüchen, der Beschreibung und den Zeichnungen.

Die Erfindung wird nachfolgend beispielhaft mit Bezug auf die Zeichnungen beschrieben. Es zeigen:
- Fig. 1: eine schematische Darstellung eines optoelektronischen Sensorsystems;
- Fig. 2: einen Querschnitt durch eine Objektivanordnung für das Sensorsystem von Fig. 1 gemäß einer alternativen Ausgestaltung; und
- Fig. 3: eine schematische Darstellung einer abgewandelten Ausführungsform eines optoelektronischen Sensors.

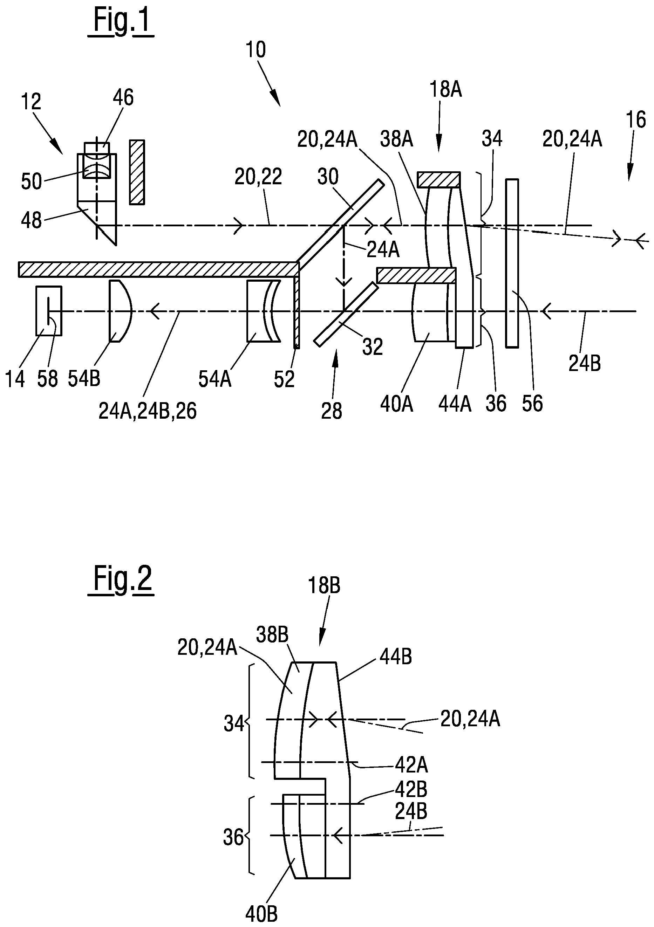

Fig. 1 zeigt in schematischer Darstellung und nicht maßstabsgetreu die optischen Komponenten und Strahlengänge eines optoelektronischen Sensorsystems 10 zum Detektieren von Objekten in einem Überwachungsbereich 16. Das Sensorsystem 10 umfasst einen Lichtsender 12 zum Aussenden von Licht entlang eines Sendelichtpfads 20 in den Überwachungsbereich 16, einen Lichtempfänger 14 zum Empfangen von Empfangslicht aus dem Überwachungsbereich und eine dem Lichtsender 12 und dem Lichtempfänger 14 vorgeordneten Objektivanordnung 18A. Zwischen der Objektivanordnung 18A und dem Überwachungsbereich 16 kann eine lichtdurchlässige Frontscheibe 56 vorgesehen sein.

Der Lichtsender 12 umfasst ein oder mehrere Lichtquellen 46, beispielsweise LEDs. Das von der Lichtquelle emittierte Licht wird mittels einer Kollimatoroptik 50 kollimiert und mit Hilfe einer Sendelichtumlenkungsoptik 48 um 90° umgelenkt.

Der Lichtempfänger 14 umfasst einen lichtempfindlichen Sensor, beispielsweise einen Zeilensensor 58. Dem Lichtempfänger 14 sind Empfangslinsen 54A, 54B sowie eine Empfangsblende 52 vorgeordnet.

Zwischen dem Lichtsender 12 und dem Lichtempfänger 14 einerseits und der Objektivanordnung 18A andererseits befindet sich ein Aufnahmeraum 28, in den zwei Umlenkelemente 30, 32 eingebracht sind, wobei das Umlenkelement 30 als Teilerspiegel und das Umlenkelement 32 als Umlenkspiegel ausgestaltet sind. Die Umlenkelemente 30, 32 können wahlweise in den Aufnahmeraum 28 eingebracht oder aus diesem entfernt werden. Alternativ kann vorgesehen sein, dass die Umlenkelemente 30, 32 auch z. B. aus dem Aufnahmeraum 28 aus der in Fig. 1 dargestellten Umlenkposition herausgeschwenkt oder herausgehoben werden können, dass sie sich in einer Freigabeposition befinden, in welcher sie die Lichtpfade nicht beeinflussen.

Die Objektivanordnung 18A ist in lateraler Richtung, d.h. quer zum Sendelichtpfad 20, in einen ersten Objektivbereich 34 und einen zweiten Objektivbereich 36 unterteilt. Im ersten Objektivbereich 34 befindet sich ein erstes Linsenelement 38A, welches zum einen Sendelicht, welches sich entlang des Sendelichtpfads 20 ausbreitet, in Richtung des Überwachungsbereichs 16 fokussiert. Weiterhin fokussiert das Linsenelement 38A aus dem Überwachungsbereich 16 reflektiertes oder remittiertes Empfangslicht, welches sich entlang eines Empfangslichtpfads 24A ausbreitet, in Richtung des um 45° in Bezug auf den Sendelichtpfad 20 geneigten Teilerspiegels 30, wo es um 90° in Richtung auf den Umlenkspiegel 32 umgelenkt wird. Der parallel zum Teilerspiegel 30 verlaufende Umlenkspiegel 32 lenkt das Empfangslicht entgegensetzt um 90° um, so dass es entlang eines Teilabschnitts 26 des Empfangslichtpfads 24A parallel beabstandet zu einem Teilabschnitt 22 des Sendelichtpfads 20, der zwischen dem Lichtsender 12 und dem Teilerspiegel 30 verläuft, zum Lichtempfänger 14 gelangt.

Die Objektivanordnung 18A umfasst in ihrem zweiten Objektivbereich 36 ein zweites Linsenelement 40A, welches lateral beabstandet zu dem ersten Linsenelement 38A angeordnet ist. Licht, welches aus dem Überwachungsbereich 16 durch den zweiten Objektivbereich 36 entlang eines weiteren Sendelichtpfads 24B durch die Objektivanordnung 18A hindurchtritt, gelangt bei nicht eingebrachtem Umlenkspiegel 32 ohne Umlenkung auf den Lichtempfänger 14.

Wenn die Umlenkelemente 30, 32 in den Aufnahmeraum eingebracht sind, wird das Sensorsystem 10 in einer Autokollimationskonfiguration betrieben. Hierbei gelangt nur dasjenige Empfangslicht, das sich entlang des Empfangslichtpfads 24A ausbreitet, tatsächlich auch auf den Lichtempfänger 14. Empfangslicht, welches sich entlang des anderen Empfangslichtpfads 24B ausbreitet, trifft auf die Rückseite des Umlenkspiegels 32 und gelangt somit nicht auf den Lichtempfänger 14, sondern kann durch geeignete Absorptionsmittel unschädlich gemacht werden.

Wenn die Umlenkelemente 30, 32 nicht in den Aufnahmeraum 28 eingebracht sind oder aus dem Aufnahmeraum 28 herausgeschwenkt oder herausgeschoben sind (nicht dargestellt), befindet sich das Sensorsystem in einer Biaxialkonfiguration. Hierbei gelangt nur dasjenige Empfangslicht, welches sich entlang des Empfangslichtpfads 24B ausbreitet, auf den Lichtempfänger 14. Empfangslicht, welches sich über den Empfangslichtpfad 24A ausbreitet, wird nicht umgelenkt und gelangt somit auch nicht auf den Lichtempfänger 14, sondern breitet sich in Richtung des Lichtsenders 12 aus, wo es durch geeignete Maßnahmen unschädlich gemacht werden kann.

Beide Empfangslichtpfade 24A, 24B fallen in dem Teilabschnitt 26 zwischen dem Lichtempfänger 14 und dem Umlenkspiegel 32 zusammen.

In dem in Fig. 1 dargestellten Ausführungsbeispiel umfasst die Objektivanordnung 18A ein Keilelement 44A, welches die beiden Objektivbereiche 34, 36 überdeckt. Das Keilelement 44A verläuft im ersten Objektivbereich 34 keilförmig, d.h. eine Oberfläche ist gegenüber dem Sendelichtpfad 20 geneigt. Im zweiten Objektivbereich 36 ist das Keilelement 44A als planparallele Platte ausgebildet, d.h. die beiden Hauptbegrenzungsflächen des Keilelements 44A verlaufen im zweiten Objektivbereich 36 senkrecht zu dem Empfangslichtpfad 24B. Durch den keilförmigen Abschnitt des Keilelements 44A wird der Sendelichtpfad 20 in Richtung des Empfangslichtpfades 24B abgelenkt, was in Fig. 1 durch eine dünnere Linie dargestellt ist. Der Sendelichtpfad 20 (und damit auch der Empfangslichtpfad 24A) schneidet im Überwachungsbereich 16 außerhalb der Darstellung von Fig. 1 den Empfangslichtpfad 24B, so dass bei einer Konfiguration als Biaxialsensor eine Signalschwächung durch den Parallaxenfehler weitgehend vermieden werden kann.

Gemäß alternativer Ausführungsformen kann das Keilelement 44A entfallen oder auch als wahlweise in den Strahlengang einbringbares Bauteil ausgestaltet sein.

Fig. 2 zeigt gemäß einer alternativen Ausgestaltung eine abgewandelte Objektivanordnung 18B, welche ähnlich der Objektivanordnung 18A (Fig. 1) ein erstes Linsenelement 38B und ein zweites Linsenelement 40B aufweist, die lateral versetzt zueinander in den ersten und zweiten Objektivbereichen 34, 36 angeordnet sind. Es ist wiederum ein Keilelement 44B vorgesehen, welches beide Objektivbereiche 34, 36 überdeckt, jedoch nur im ersten Objektivbereich 34 keilförmig ausgebildet ist. Die Linsenelemente 38B, 40B sind im Unterschied zu dem Ausführungsbeispiel von Fig. 1 jedoch so ausgebildet und angeordnet, dass deren optische Achsen 42A, 42B nach innen zueinander hin versetzt sind, d.h. der Abstand der optischen Achsen 42A, 42B der Linsenelemente 38B, 40B ist kleiner als der Abstand der optischen Achsen des Sendelichtpfads 20 und des Empfangslichtpfads 24B. Hierdurch wird der Verlauf von Sende- und Empfangslichtpfad 20, 24A, 24B zusätzlich so beeinflusst, dass diese in Richtung Überwachungsbereich 16 zusammenlaufen und sich dort schneiden. Durch den Versatz beider optischen Achsen 42A und 42 B gegenüber den optischen Achsen des Sendelichtpfades 20 (bzw. des Empfangslichtpfades 24A) und des Empfangslichtpfades 24B verlaufen hier nicht nur der Sendelichtpfad 20 und der Empfangslichtpfad 24A im Überwachungsbereich unter einem Winkel, sondern auch der zweite Empfangslichtpfad 24B der Pupillenteilungsanordnung. Die Strahlengänge innerhalb der Objektivanordnung 18B sind nur schematisch angedeutet.

Wie in Fig. 2 zu erkennen ist, sind die optischen Achsen 42A, 42B beider Linsenelemente 38B, 40B gegenüber den optischen Achsen der zugehörigen Lichtpfade 20, 24A, 24B versetzt. Alternativ kann ein solcher Versatz auch nur bei einem der Linsenelemente 38B, 40B vorgesehen sein.

Die gesamte Anordnung der Fig. 2 kann auch als integrales Bauelement ausgestaltet sein.

Gemäß einer weiteren Abwandlung kann das Keilelement 44B auch entfallen, so dass die Parallaxenkompensation alleine durch den Versatz zwischen den optischen Achsen der Linsenelemente 38B, 40B und der Lichtpfade 20, 24B bewirkt wird.

Zwischen verschiedenen Bereichen des Sensorsystems 10 können lichtundurchlässige Trennwände vorgesehen sein, die in Fig. 1 beispielhaft als dicke durchgezogene Blöcke dargestellt sind.

Das Sensorsystem 10 ist mit geringem Aufwand zwischen einer Autokollimationskonfiguration und einer Biaxialkonfiguration und umgekehrt umwandelbar und daher universell einsetzbar. Somit entfällt der Aufwand, zwei separate Sensorsysteme für spezifische jeweilige Anwendungen dieser Konfigurationen zu produzieren und vorzuhalten, wodurch sich ein deutlicher Vorteil bei den Herstellungs- und Vertriebskosten ergibt.

In Fig. 1 nicht erkennbar ist, dass bei dieser Ausführungsform die Lichtquellen 46 entlang einer Geraden aufgereiht sind, die senkrecht zur Figurenebene der Fig. 1 ist. Es ergibt sich dadurch ein linienförmiger Abtastfleck senkrecht zu einer Ebene, welche durch diejenigen Teilabschnitte des Sendelichtpfades und des Empfangslichtpfades definiert ist, welche dem Lichtsender 12 bzw. dem Lichtempfänger 14 zugewandt sind. Ein auf diese Weise erzeugter linienförmiger Abtastfleck verläuft parallel zu der Neigungsachse des oder der Umlenkelemente 30, 32, d. h. parallel zu der Achse, um welche das oder die Umlenkelemente 30, 32 in Bezug auf den jeweiligen Lichtpfad verkippt sind. Wie bereits oben vor der Figurenbeschreibung für einen solchen Fall bereits geschildert, lässt sich auf diese Weise die Dimension des jeweiligen Umlenkelementes 30, 32 optimiert klein ausgestalten, da die Dimension des jeweiligen Umlenkelementes 30, 32 nur so groß sein muss wie die Erstreckung der Abbildung des linienförmigen Abtastfleckes beim Auftreffen auf das Umlenkelement, ohne dass eine Neigung des Umlenkelementes bei der Auswahl seiner Dimension berücksichtigt werden müsste. Vorteilhafterweise erstreckt sich dann ein zeilenförmiges Empfangselement 58 ebenfalls senkrecht zur Figureneben der Fig. 1.

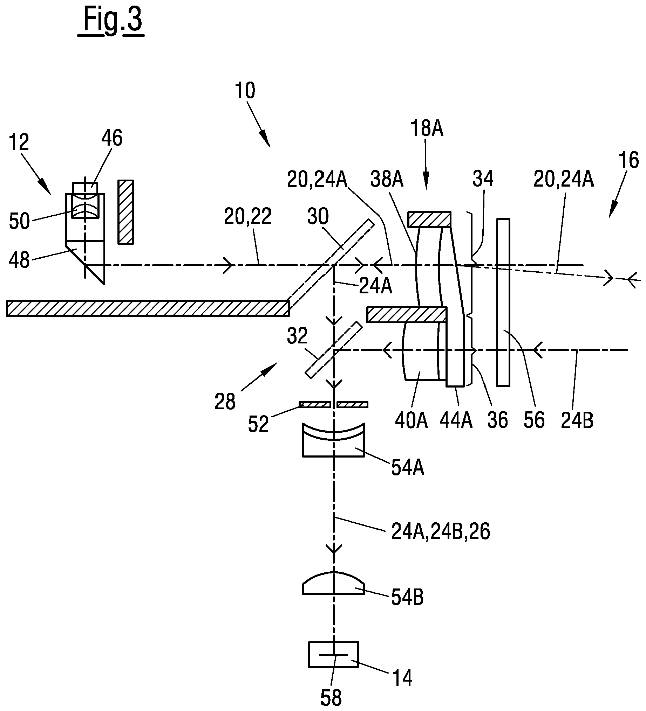

Fig. 3 zeigt in schematischer Darstellung und nicht maßstabsgetreu die optischen Komponenten und Strahlengänge einer abgewandelten Ausgestaltung, bei der die dem Lichtsender 12 bzw. dem Lichtempfänger 14 zugewandten Teilabschnitte 22 bzw. 26 des Sendelichtpfades 20 bzw. des Empfangslichtpfades 24A, 24B senkrecht zueinander angeordnet sind. In diesem Fall kann das Sensorsystem in Autokollimationsanordnung betrieben werden, wenn der Teilerspiegel 30 eingesetzt ist und der Umlenkspiegel 32 nicht. Ein Pupillenteilungssystem kann realisiert werden, indem der Umlenkspiegel 32 (in gegenüber der Verwendung in Fig. 1 umgekehrter Ausrichtung) eingesetzt wird und der Teilerspiegel 30 nicht. Nachdem der Teilerspiegel 30 und der Umlenkspiegel 32 hier alternativ eingesetzt werden, sind sie in Fig. 3 gestrichelt dargestellt. Auch bei einer Ausgestaltung der Fig. 3 kann die Objektivanordnung 18B gemäß der Fig. 2 anstelle der Objektivanordnung 18A der Fig. 1 zum Einsatz kommen. Ansonsten entspricht die Anordnung der Fig. 3 derjenigen der Fig. 1, so dass auch sich entsprechende Bezugsziffern verwendet wurden.

Während es bei einer Anordnung der Fig. 1 möglich ist den Teilerspiegel und der Umlenkspiegel in einer Einheit zu verwirklichen, die sich entweder im Strahlengang befindet (für eine Autokollimationsanordnung) oder nicht (für eine Pupillenteilungsanordnung), ist es bei einer Anordnung der Fig. 3 möglich, ein Element zu verwenden, das entweder an der Position des Teilerspiegels 30 (für eine Autokollimationsanordnung) oder an der Position des Umlenkspiegels (für eine Pupillenteilungsanordnung) zum Einsatz kommt.

Die dargestellten Anordnungen verwirklichen parallele oder senkrechte Strahlengänge in dem Sensorsystem, wobei dies im Wesentlichen durch die parallele Anordnung bzw. Einsetzmöglichkeit von Teiler- und Umlenkspiegel gewährleistet ist. Andere Winkel sind z.B. durch nicht parallele Ausrichtungen bzw. Ausrichtungsmöglichkeiten von Teiler- und Umlenkspiegel realisierbar.

Ein erfindungsgemäßes Sensorsystem (nicht dargestellt) basiert auf den vorstehend beschriebenen Ausführungsbeispielen, wobei das oder die Umlenkelemente 30, 32 in den Strahlengang eingebracht sind. Anstelle einer Objektivanordnung 18A, 18B mit mehreren Objektivbereichen 34, 36 kann bei dem erfindungsgemäßen Sensorsystem vorteilhaft auch ein herkömmliches Objektiv mit nur einem Objektivbereich im Bereich des Empfangslichtpfads 24A verwendet werden, so dass der Empfangslichtpfad 24B entfallen kann.

### Bezugszeichenliste

- 10: Sensorsystem
- 12: Lichtsender
- 14: Lichtempfänger
- 16: Überwachungsbereich
- 18A, 18B: Objektivanordnung
- 20: Sendelichtpfad
- 22: Teilabschnitt des Sendelichtpfades
- 24A, 24B: Empfangslichtpfad
- 26: Teilabschnitt des Empfangslichtpfades
- 28: Aufnahmeraum
- 30: Umlenkelement, Teilerspiegel
- 32: Umlenkelement, Umlenkspiegel
- 34: erster Objektivbereich
- 36: zweiter Objektivbereich
- 38A, 38B: erstes Linsenelement
- 40A, 40B: zweites Linsenelement
- 42A, 42B: optische Achse
- 44A, 44B: Keilelement
- 46: Lichtquelle
- 48: Sendelichtumlenkungsoptik
- 50: Kollimatoroptik
- 52: Empfangsblende
- 54A, 54B: Empfangslinse
- 56: Frontscheibe
- 58: Zeilensensor

## Patentansprüche

1. Optoelektronisches Sensorsystem (10) zum Detektieren von Objekten in einem Überwachungsbereich (16), mit
- einem Lichtsender (12) zum Aussenden von Sendelicht entlang eines Sendelichtpfads (20) in den Überwachungsbereich (16),
- einem Lichtempfänger (14) zum Empfangen von Empfangslicht aus dem Überwachungsbereich (16), das von einem zu detektierenden Objekt im Überwachungsbereich (16) oder einem den Überwachungsbereich (16) begrenzenden Reflektor entlang eines Empfangslichtpfads (24A, 24B) in Richtung des Lichtempfängers (14) remittiert wird, und
- einer dem Lichtsender (12) und dem Lichtempfänger (14) vorgeordneten Objektivanordnung (18A, 18B),
wobei
der Sendelichtpfad (20) und der Empfangslichtpfad (24A, 24B) in jeweiligen dem Lichtsender (12) bzw. dem Lichtempfänger (14) zugewandten Teilabschnitten (22, 26) voneinander beabstandet verlaufen,
das Sensorsystem (10) zwischen der Objektivanordnung (18A, 18B) einerseits und dem Lichtsender (12) und dem Lichtempfänger (14) andererseits zumindest ein Umlenkelement (30, 32) aufweist,
wobei das Sensorsystem (10) dazu ausgelegt ist, einen linienförmigen Abtastfleck im Überwachungsbereich (16) zu erzeugen, und der Lichtempfänger dazu ausgelegt ist, eine Abbildung des von einem Objekt remittierten Abtastflecks, vorzugsweise ortsaufgelöst, zu erfassen, und
sich der linienförmige Abtastfleck senkrecht zu einer Ebene erstreckt, welche durch die Teilabschnitte des Sendelichtpfades (20) und des Empfangslichtpfades (24A, 24B) definiert ist, welche dem Lichtsender (12) bzw. dem Lichtempfänger (14) zugewandt sind.

2. Sensorsystem (10) nach Anspruch 1,
**dadurch gekennzeichnet,**
**dass** die Objektivanordnung (18A, 18B) einen ersten Objektivbereich (34) und einen zumindest lateral zum ersten Objektivbereich (34) beabstandeten zweiten Objektivbereich (36) aufweist, wobei der Sendelichtpfad (20) durch den ersten Objektivbereich (34) verläuft.

3. Sensorsystem (10) nach Anspruch 1 oder 2,
**dadurch gekennzeichnet,**
**dass** das Umlenkelement (30, 32) dazu ausgelegt ist, den Empfangslichtpfad (24A, 24B) derart zu definieren, dass er durch den ersten Objektivbereich (34) verläuft.

4. Sensorsystem (10) nach einem der vorhergehenden Ansprüche,
**dadurch gekennzeichnet,**
**dass** zumindest diejenigen Teilabschnitte (22, 26) des Sendelichtpfads (20) und des Empfangslichtpfads (24A, 24B), welche dem Lichtsender (12) bzw. dem Lichtempfänger (14) zugewandt sind, parallel oder in einem Winkel, insbesondere in einem rechten Winkel, zueinander verlaufen.

5. Sensorsystem (10) nach einem der vorhergehenden Ansprüche,
**dadurch gekennzeichnet,**
**dass** der Sendelichtpfad (20) und der Empfangslichtpfad (24A) im Bereich der Objektivanordnung (18A, 18B) und im Überwachungsbereich (16) zusammenfallen.

6. Sensorsystem (10) nach einem der vorhergehenden Ansprüche,
**dadurch gekennzeichnet,**
**dass** das Umlenkelement als Teilerspiegel (30) ausgebildet ist, welcher dazu ausgelegt ist, das Sendelicht im Wesentlichen unbeeinflusst durchzulassen und das Empfangslicht um einen Winkel, insbesondere einen rechten Winkel, umzulenken.

7. Sensorsystem (10) nach Anspruch 6,
**dadurch gekennzeichnet,**
**dass** zusätzlich zu dem als Teilerspiegel (30) ausgebildeten Umlenkelement ein weiteres, als Umlenkspiegel (32) ausgebildetes Umlenkelement vorgesehen ist.
